# EUROPÄISCHE PATENTSCHRIFT

(11) **EP 0 964 814 B1**
(45) Veröffentlichungstag und Bekanntmachung des Hinweises auf die Patenterteilung: **16.05.2001**
(21) Anmeldenummer: 98916841.4
(22) Anmeldetag: 04.03.1998
(51) Int. Cl.: B62D 65/00, B60R 13/02

(54) **FAHRZEUGDACH UND VERFAHREN ZUR MONTAGE DES FAHRZEUGDACHS AN EINER KAROSSERIE**
VEHICLE ROOF AND METHOD FOR MOUNTING SAID VEHICLE ROOF ON A VEHICLE BODY
TOIT DE VEHICULE ET PROCEDE DE MONTAGE DE CE TOIT SUR UNE CARROSSERIE

(30) Priorität: 06.03.1997 DE 19709016
(43) Veröffentlichungstag der Anmeldung: 22.12.1999
(60) Teilanmeldung: 99117508.4
(73) Patentinhaber: Meritor Automotive GmbH, 60314 Frankfurt (DE)
(72) Erfinder: BÖHM, Horst, D-60599 Frankfurt (DE); GRIMM, Rainer, D-60599 Frankfurt (DE); BECHER, Thomas, D-63110 Rodgau (DE)
(74) Vertreter: Oppermann, Ewald, Dipl.-Ing.
(86) Internationale Anmeldenummer: DE9800627
(87) Internationale Veröffentlichungsnummer: WO9839170

(56) Entgegenhaltungen:
- EP-A- 0 075 754
- FR-A- 2 529 844
- US-A- 4 358 883

## Beschreibung

Die Erfindung bezieht sich auf ein Fahrzeugdach, insbesondere Kraftfahrzeugdach, entsprechend den Oberbegriffen der nebengeordneten Patentansprüche 1 bis 3 und schließt auch ein Verfahren zur Montage des Fahrzeugdachs an einem Karosserierahmen ein.

Bei herkömmlichen Fahrzeugkarosserien ist das Fahrzeugdach, das eine Dachöffnung aufweisen kann, der ein verlagerbarer Deckel oder ein Faltdach zugeordnet sein kann, ein fester in die Karosserie integrierter Bestandteil, der sich unmittelbar an die Säulen der Karosserie anschließt. Bei derartigen Karosserien sind der Dachhimmel und ggf. weitere Verkleidungsteile sowie andere im Dachbereich anzubringende Fahrzeugteile, wie Sonnenblenden, Haltegriffe und - falls vorhanden - Schiebe- oder Faltdachelemente nachträglich und teilweise vom Fahrzeuginnenraum her zu montieren.

Es sind aber auch bereits Fahrzeugdächer vorgeschlagen worden, die als Module getrennt von der Fahrzeugkarosserie hergestellt und mit ihren Außenrändern auf einen an den Karosseriesäulen angebrachten Karosserierahmen aufgelegt und mit diesem durch Kleben oder Schrauben fest verbunden werden. Beispielsweise ist ein derartiges bekanntes Fahrzeugdach (DE 28 45 708 A1) als vorgeformte Sandwichplatte ausgebildet, die an der Außenseite eine Dachhaut und an der Innenseite ein Polster- und/ oder Bezugsmaterial als Dachhimmel aufweist. Durch die Vormontage werden die Montagezeiten am Endmontageband verkürzt.

Allerdings sind noch randüberdeckende äußere Abdeckleisten und die Holme des Dachrahmens von innen verkleidende Abdeckprofile zusätzlich anzubringen, was die Montagezeiten erhöht.

Ein anderes modulartig ausgebildetes bekanntes Fahrzeugdach (FR 2 529 844), das einen aus Schaummaterial gebildeten Innenbelag aufweist, der einteilig mit vier Klappen versehen ist, welche mit dem Zentralbereich des Innenbelags über Scharnierstellen verbunden sind, ist nicht wie das gattungsgemäße Fahrzeugdach zur Auflage auf einen geschlossenen Karosserierahmen ausgebildet, sondern wird auf zwei seitliche Längsholme der Karosserie aufgesetzt. Vorn und hinten besitzt das Fahrzeugdach damit integrierte Hohlkörper, deren überstehenden Kanten jeweils die Windschutzscheibe bzw. das Heckfenster aufnehmen. Die Klappen des Innenbelags sind formbeständig ausgebildet und dienen seitlich der Verkleidung der Längsholme und vorn sowie hinten der Abdeckung der Dachränder und der oberen Ränder der Fenster. Bei der Montage dieses bekannten Fahrzeugdachs sind nur die beiden seitlichen Klappen nach unten/innen zu verschwenken, um beim Aufsetzen des Fahrzeugdachs zwischen den beiden seitlichen Längsholmen hindurchtreten zu können. Die vorderen und hinteren Klappen dienen beim anschließenden Einsetzen des vorderen und hinteren Fensters als Montagehilfe. Nach der Montage verbleiben an den Ecken zwischen den Klappen Ausschnitte, die noch durch zusätzlich anzubringende Abdeckelemente zu verschließen sein werden.

Der Erfindung liegt die Aufgabe zugrunde, ein modulartiges Fahrzeugdach der aus den Oberbegriffen der Patentansprüche 1 bis 3 ersichtlichen Gattung und ein Montageverfahren bereitzustellen, durch welches die Montagezeiten am Endmontageband noch erheblich weiter verkürzt werden.

Die gestellte Aufgabe wird erfindungsgemäß durch die Merkmale der unabhängigen Ansprüche 1 bis 3 gelöst. Ein für die Fahrzeugdächer gemäß dieser Ansprüche gleichermaßen geeignetes Verfahren geht aus Anspruch 12 hervor. Vorteilhafte Weiterbildungen der Fahrzeugdächer und des Montageverfahrens sind in den jeweiligen Unteransprüchen angegeben.

Allen in den Ansprüchen 1 bis 3 angegebenen Varianten des erfindungsgemäßen Fahrzeugdachs ist gemeinsam, daß das Fahrzeugdach mit einer vorgeformten den Dachhimmel bildenden Innenschale ausgebildet ist mit der Besonderheit, daß diese über die Außenränder des Fahrzeugdachs allseits übersteht, auch an den Ecken, d.h. größer ist als die Innenabmessungen der von den Holmen oder Profilen des geschlossenen Karosserierahmens begrenzten Karosserieöffnung, und daß der Dachhimmel an den überstehenden Bereichen so flexibel oder elastisch ist, daß er für den Durchtritt durch die von dem Karosserierahmen begrenzte Karosserieöffnung unter partieller Faltung in den Eckbereichen nach unten ohne bleibende Deformation umbiegbar und zur Verkleidung des Karosserierahmens ausgebildet ist. Die überstehenden Bereiche des Dachhimmels bilden somit die Verkleidungen für die Dachrahmenprofile, so daß zusätzliche Abdeckleisten und Abdeckprofile auch an den Ecken nicht erforderlich sind. Das getrennt hergestellte erfindungsgemäße Fahrzeugdach bringt in einteiliger Ausbildung schon alle Elemente mit, die nach dem Aufsetzen und Befestigen des Fahrzeugdachs auf den bzw. an dem Karosserierahmen zur Verkleidung der Sichtflächen des Karosserierahmens erforderlich sind. Dabei geht der eigentliche Dachhimmel fugenlos in seine der Dachrahmenverkleidung dienenden Bereiche über. Die Erfindung ermöglicht daher infolge der Einteiligkeit des modulartig getrennt hergestellten Fahrzeugdachs mit den Verkleidungsbereichen seines Himmels nicht nur kurze Montagezeiten am Endmontageband, sondern erzielt darüberhinaus eine fugenlose harmonische Gestaltung des gesamten Dachhimmels auch in seinen Übergangsflächen zu den verglasten Flächen der Kraftfahrzeugkarosserie, d.h. zu der Windschutzscheibe, den Seitenfenstern und dem Heckfenster, und auch in seinen Eckbereichen.

Das im Anspruch 1 angegebene Fahrzeugdach ist in zwei Ausführungsformen möglich. Zum einen kann es mit einer äußeren Dachhaut, vorzugsweise einer starren Dachhaut, die beispielsweise aus Stahlblech geformt ist, versehen sein, zum anderen kann es aus einem geeigneten Hartschaum ohne äußere Dachhaut geformt sein. Im letzteren Fall läßt sich die Außenseite so lackieren wie Karosserieblech.

Das Fahrzeugdach gemäß Anspruch 2 setzt dagegen das Vorhandensein einer starren Dachhaut voraus, deren Außenränder unmittelbar, d.h. ohne zwischenliegende Schaumschicht, auf den Dachrahmen auflegbar und daran zu befestigen sind.

Das Fahrzeugdach nach Anspruch 3 schließlich kann mit einer bereits funktionsfähig vormontierten Schiebedacheinheit versehen sein. Der als Innenschale vorgeformte Dachhimmel ist hierbei an der Unterseite des Schiebedachrahmens befestigt. Die Innenfläche der Dachhaut kann in den an die Schiebedachöffnung angrenzenden Bereichen zur Verbesserung der Schall- und Wärmeisolation zusätzlich mit Schaumstoff beschichtet sein.

Für die Formung der Innenschale eignen sich die im Anspruch 4 angegebenen PUR-Schaumstoffe, die für die Zwecke der Erfindung ausreichend flexibel oder sogar elastisch einstellbar sind. Sollknickstellen, die das vorübergehende Umbiegen nach unten und die Faltung an den vier Ecken des Fahrzeugdachs erleichtern, können entsprechend Anspruch 4 vorgesehen sein. Für diejenigen Bereiche der Innenschale, für die eine Flexibilität nicht erforderlich ist, können auch härtere Schaumstoffe zur Anwendung gelangen. Dies gilt insbesondere für den Fall, daß das Fahrzeugdach keine starre tragende Außenhaut aufweist.

In Weiterführung des Erfindungsgedankens können die nach unten umbiegbaren Bereiche der Innenschale entsprechend Anspruch 5 mit vormontierten Elementen oder mit vorbereiteten Anbringungsorten für derartige Elemente versehen sein. Hierdurch wird der Montageaufwand am Montageband noch weiter vereinfacht, weil sich entweder die betreffenden Elemente leicht an dafür vorgesehenen Stellen anbringen lassen oder sogar schon an dem modulartigen Fahrzeugdach vormontiert vorhanden sind.

Im Interesse einer möglichst umfassenden Vorfertigung des Fahrzeugdachs ohne das Erfordernis nachträglicher Anpassungsarbeiten an den Karosserierahmen können vorteilhaft an den Außenrändern des Fahrzeugdachs die Maßnahmen gemäß Anspruch 6 erfolgen. Ein so vorbereitetes Fahrzeugdach kann an allen vier Seiten ohne weiteres mit dem Karosserierahmen vereinigt werden.

Soll das Fahrzeugdach ausschließlich oder zusätzlich zu Schraubverbindungen durch Kleben mit dem Karosserierahmen vereinigt werden, so sind die Dachränder zweckmäßig entsprechend Anspruch 7 zu gestalten.

Die im Anspruch 8 angegebenen Verstärkungsteile sorgen für eine Aussteifung des Fahrzeugdachs und dienen damit nicht nur der Transport- und Handhabungsfähigkeit des vormontierten Fahrzeugdachs, sondern auch zu seiner Versteifung nach der Montage am Karosserierahmen. Die hierfür vorgesehenen im Schaumstoff eingebetteten Verstärkungsteile müssen nicht vollständig vom Schaumstoff umhüllt sein, sondern können mit ihren unteren Flächen entsprechend Anspruch 9 freiliegen, so daß sie dem Karosserierahmen unmittelbar zur Befestigung flächig aufgelegt werden können.

Bei Ausbildung des Fahrzeugdachs mit einem Schiebedach entsprechend Anspruch 3 kann über den Randspalt des Schiebedachs eintretendes und von dem Schiebedachrahmen aufgefangenes Wasser vorteilhaft durch die in Anspruch 10 angegebene Ausbildung nach außen abgeleitet werden. Hierbei ist es zweckmäßig entsprechend Anspruch 11 eine Wasserablauffuge zwischen dem Außenrand der Dachhaut und dem Karosserierahmen vorzusehen.

Entsprechend dem erfindungsgemäßen Verfahren zur Montage des Fahrzeugdachs an einem Karosserierahmen ist gemäß Anspruch 12 vorgesehen, daß
(a) die über die Außenränder des Fahrzeugdachs überstehende Innenschale bzw. die untere Schicht der Innenschale unter partieller Faltung in den Eckbereichen nach unten umgebogen wird,
(b) das Fahrzeugdach unter Durchtritt der umgebogenen Bereiche der Innenschale durch den Karosserierahmen hindurch mit seinen Außenrändern von oben dem Karosserierahmen aufgelegt und daran befestigt wird, und
(c) die Innenschale mit ihren zur Verkleidung des Karosserierahmens ausgebildeten Bereichen zurückgebogen, an die nach unten bzw. innen weisenden Flächen des Karosserierahmens angelegt und dann am Karosserierahmen befestigt werden.

Das Montageverfahren läßt sich gemäß Anspruch 13 noch weiter dadurch verbessern, daß die umgebogene Lage der davon betroffenen Bereiche der Innenschale vorübergehend fixiert wird und die Fixierung nach Durchtritt der umgebogenen Bereiche durch den Karosserierahmen und Befestigung des Fahrzeugdachs an dem Karosserierahmen aufgehoben wird. Für die vorübergehende Fixierung ist es beispielsweise ausreichend, wenn die nach unten umgebogenen Bereiche der Innenschale durch ein um diese Bereiche von außen herumgelegtes flexibles Band oder ein Seil od.dgl. zusammengeschnürt werden.

Weitere Einzelheiten der Erfindung werden anhand der unterschiedliche Ausführungsformen darstellenden Zeichnungen näher erläutert. Darin zeigt:

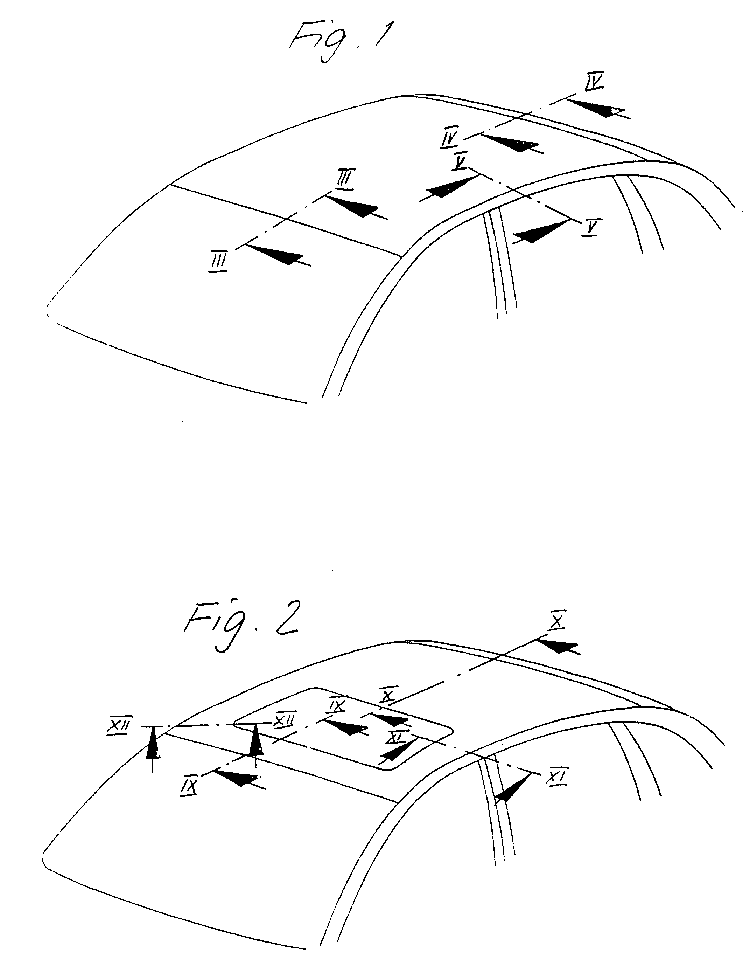

- Fig. 1: eine schematische Perspektivansicht eines schon an einer PKW-Karosserie angebrachten Fahrzeugdachs,
- Fig. 2: eine der Fig. 1 entsprechende Perspektivansicht, jedoch mit einer in das Fahrzeugdach eingebauten Schiebedacheinheit,
- Fig. 3: einen abgebrochenen Schnitt entsprechend der Linie III-III in Fig. 1 betreffend eine erste Ausführungsform,
- Fig. 4: einen abgebrochenen Schnitt entsprechend der Linie IV-IV in Fig. 1 betreffend die erste Ausführungsform,
- Fig. 5: einen abgebrochenen Schnitt entsprechend der Linie V-V in Fig. 1 betreffend die erste Ausführungsform,
- Fig. 6: einen der Fig. 3 ähnlichen Schnitt betreffend eine zweite Ausführungsform,
- Fig. 7: einen der Fig. 4 ähnlichen Schnitt betreffend die zweite Ausführungsform,
- Fig. 8: einen der Fig. 5 ähnlichen Schnitt betreffend die zweite Ausführungsform,
- Fig. 9: einen abgebrochenen Schnitt entsprechend der Linie IX-IX in Fig. 2 betreffend eine dritte Ausführungsform mit eingebautem Schiebedach,
- Fig. 10: einen abgebrochenen Schnitt entsprechend der Linie X-X in Fig. 2 betreffend die dritte Ausführungsform,
- Fig. 11: einen abgebrochenen Schnitt entsprechend der Linie XI-XI in Fig. 2 betreffend die dritte Ausführungsform,
- Fig. 12: einen abgebrochenen Schnitt entsprechend der Linie XII-XII in Fig. 2 betreffend die dritte Ausführungsform,
- Fig. 13: einen der Fig. 5 ähnlichen Schnitt betreffend eine nur mit dieser Fig. gezeigte vierte Ausführungsform,
- Fig. 14: einen der Fig. 5 ähnlichen Schnitt betreffend eine nur in den Fig. 14 und 15 gezeigte fünfte Ausführungsform,
- Fig. 15: einen der Fig. 14 ähnlichen Schnitt betreffend ein anderes Ausstattungsdetail der fünften Ausführungsform,
- Fig. 16A: eine das Montageverfahren erläuternde Perspektivdarstellung des Fahrzeugdachs vor dem Einbau,
- Fig. 16B: das Fahrzeugdach gemäß Fig. 16A, jedoch einbaufertig mit nach unten umgebogenen Bereichen des Dachhimmels bzw. der Innenschale und
- Fig. 16C: eine Perspektivansicht der PKW-Karosserie vor der Dachmontage.

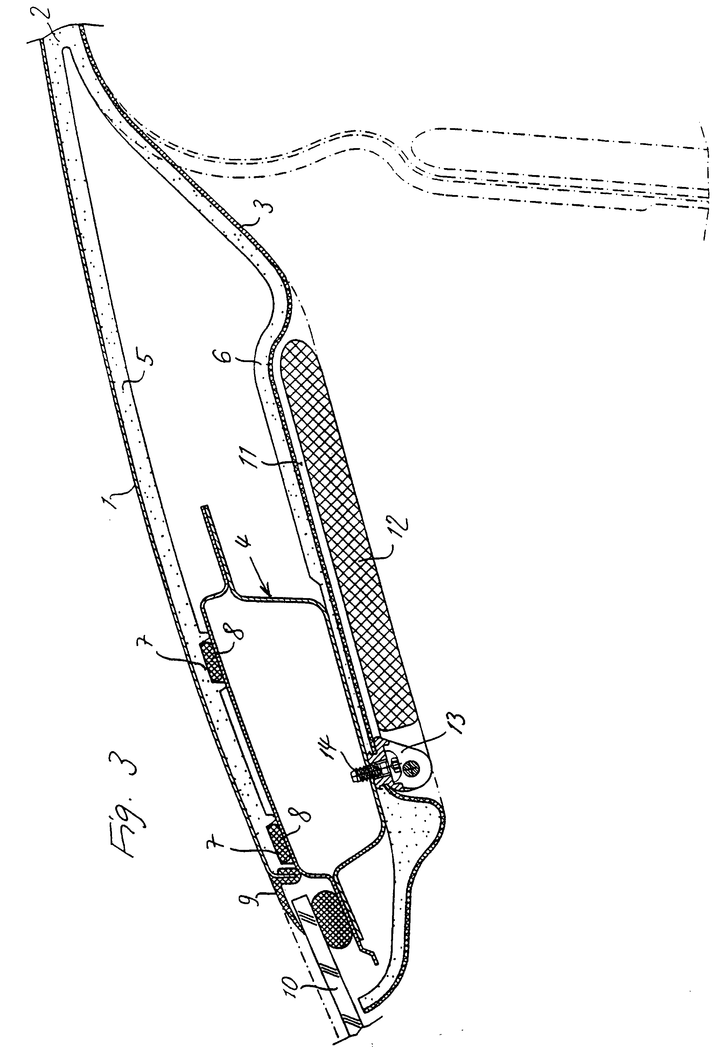

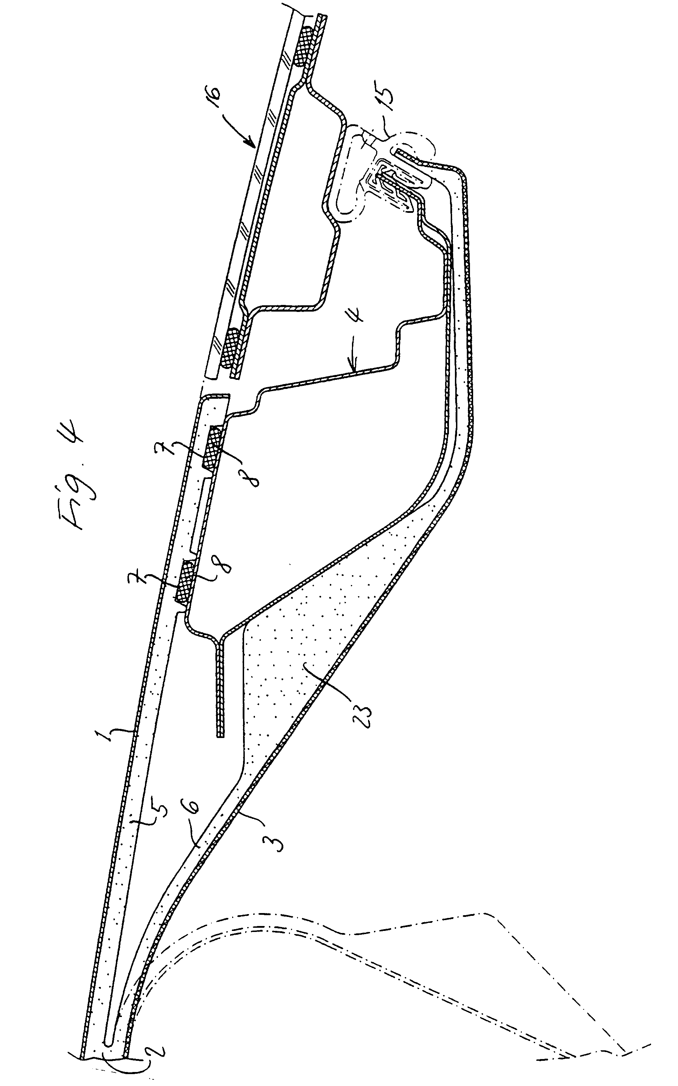

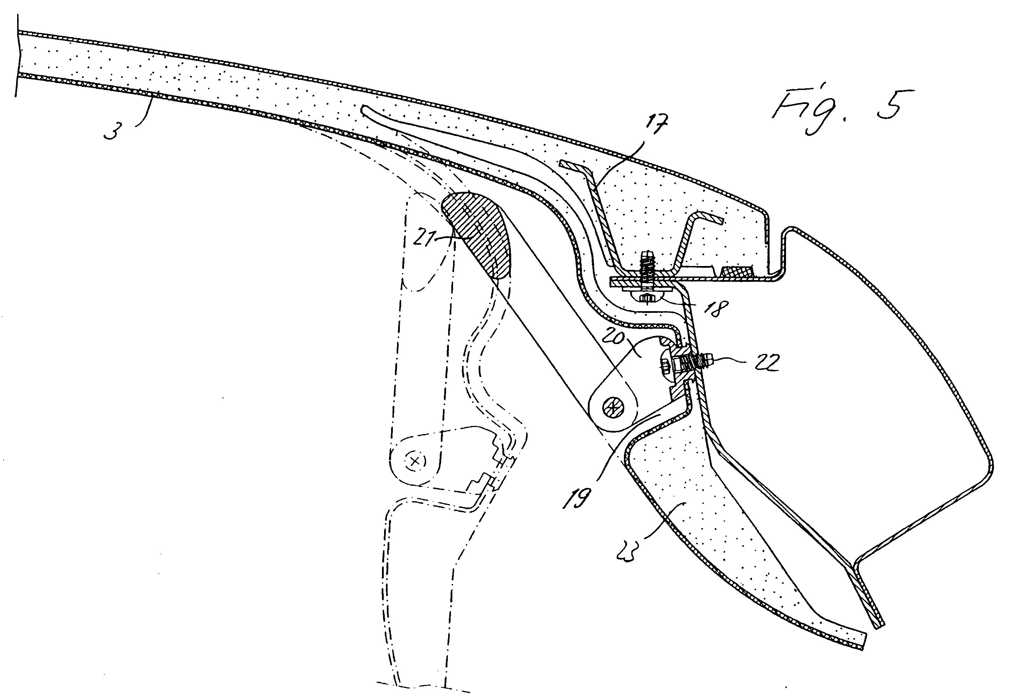

Zur näheren Erläuterung der ersten Ausführungsform des Fahrzeugdachs wird zunächst auf die Fig. 3 bis 5 Bezug genommen. Das daraus ersichtliche Fahrzeugdach besteht aus einer aus einem metallischen Werkstoff, z.B. Stahlblech geformten Außenschale oder Dachhaut 1 und einer damit sandwichartig verbundenen Innenschale 2, die aus einem Schaumkunststoff, beispielsweise einem PUR-Schaumstoff gebildet ist. Die Innenfläche der Innenschale 2 ist zur Ausbildung des Dachhimmels mit einem textilen oder folienartigen Bezugsmaterial 3 beschichtet. Wie bei allen hier gezeichneten und beschriebenen Schnittdarstellungen ist der Einbauzustand des Fahrzeugdachs dargestellt, bei dem die Außenränder des Dachs auf den Karosserierahmen 4 aufgelegt sind. In Fig. 3 ist der vordere Querholm, in Fig. 4 der hintere Querholm und in Fig. 5 einer der Seitenholme des Karosserierahmens 4 dargestellt.

Die Innenschale 2 ist im Bereich der zur Auflage auf den Karosserierahmen 4 vorgesehenen Außenränder in zwei Schichten aufgeteilt, von denen die obere Schicht 5 auf den Karosserierahmen 4 aufgelegt ist, während die untere Schicht 6 über die Außenränder des Fahrzeugdachs übersteht. Die untere Schicht 6 ist für den Durchtritt durch die von dem Karosserierahmen 4 begrenzte Karosserieöffnung nach unten ohne bleibende Deformation umbiegbar, wie das in den Fig. in strichpunktierten Linien angedeutet ist. Diese nach unten umbiegbare untere Schicht 6 ist an die nach unten bzw. innen weisenden Flächen des Karosserierahmens 4 angelegt und auf noch zu beschreibende Weise befestigt.

Die obere Schicht 5 ist im Bereich ihrer Auflage auf den Karosserierahmen 4 mit in den Schaumstoff eingeformten Aufnahmenuten 7 für Klebstoff 8 versehen. Auf diese Weise ist das Fahrzeugdach fest mit dem Karosserierahmen 4 verbunden. Im vorderen Bereich ist auf eine Abkantung der Außenschale 1 ein Lippenprofil 9 aufgesteckt, das der Windschutzscheibe 10 anliegt. Die untere Schicht 6 verkleidet den Karosserierahmen 4 vollständig und ist in ihrem vorderen Bereich mit Vertiefungen 11 versehen, welche schwenkbare Sonnenblenden 12 aufnehmen. Die Schwenklagerböcke 13 der Sonnenblenden 12 sind in entsprechende Ausnehmungen in der unteren Schicht 6 und dem Bezugsmaterial 3 verrastet, was eine Vormontage der Sonnenblenden an der Innenschale ermöglicht. Nach dem Verkleiden des Karosserierahmens 4 werden durch die Schwenklagerböcke hindurch Befestigungsschrauben 14 in den Karosserierahmen 4 eingeschraubt.

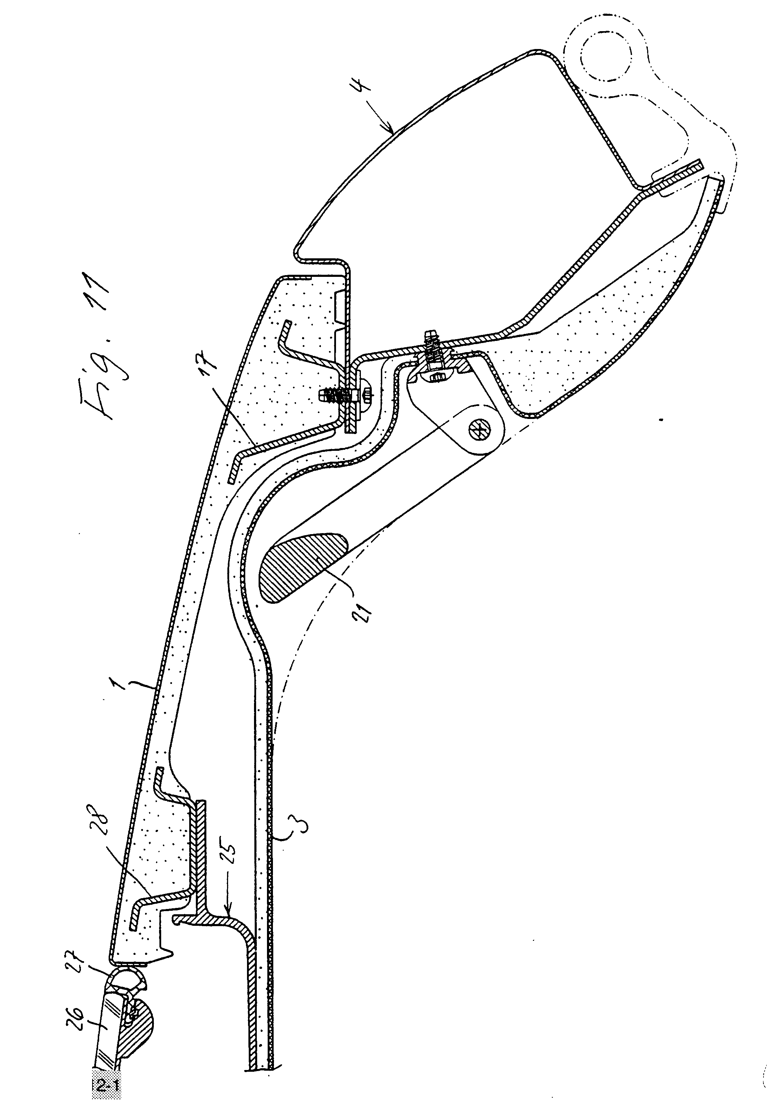

An den aus Fig. 4 ersichtlichen hinteren Querholm des Karosserierahmens 4 ist die untere Schicht 6 angelegt und mit diesem über einen sowohl auf einen Flansch des Querholms als auch auf den Außenrand der unteren Schicht 6 aufgesteckten Keder 15 fest verbunden. Der in Fig. 4 in strichpunktierten Linien dargestellte Keder ist zugleich das Abdichtprofil für die bei diesem Ausführungsbeispiel vorgesehene Heckklappe 16. Wie aus Fig. 5 hervorgeht, ist an den Seiten des Fahrzeugdachs in die obere Schicht 5 ein Verstärkungsteil 17 in Form eines durchgehenden Profils in den Schaumstoff eingebettet. Die untere Fläche des Verstärkungsteils 17 liegt dem Karosserierahmen unmittelbar flächig an. Hier ist das Fahrzeugdach mit den Seitenholmen des Karosserierahmens durch Befestigungsschrauben 18 fest verbunden, die durch einen Flansch des Karosserierahmens 4 hindurchgeführt und in das Verstärkungsteil 17 eingeschraubt sind. Diese Befestigung erfolgt vor der Verkleidung des Karosserierahmens 4 mit der unteren Schicht 6 der Innenschale 2, die auch in Fig. 5 in strichpunktierten Linien nach unten umgebogen dargestellt ist. Außen ist in den Schaumstoff der oberen Schicht 5 zusätzlich eine Aufnahmenut 7 für Klebstoff 8 angebracht. In Fig. 5 ist auch noch dargestellt, daß in Vertiefungen 19 der unteren Schicht 6 Schwenklagerböcke 20 für Haltegriffe 21 in entsprechende Bohrungen der unteren Schicht 6 und des Bezugsmaterials 3 eingerastet sind. Auch die Haltegriffe 21 mit ihren Schwenklagerböcken 20 können daher an dem Fahrzeugdach vormontiert werden. Wie unter Bezugnahme auf Fig. 3 anhand der dort gezeigten Sonnenblenden 12 schon beschrieben wurde, werden auch bei den Haltegriffen 21 Befestigungsschrauben 22 durch die Schwenklagerböcke 20 hindurchgeführt und in den Karosserierahmen 4 eingeschraubt. Zusätzlich zu dieser Befestigung wird noch der Außenrand der unteren Schicht 6 mit einem entsprechenden Flansch des Karosserierahmens 4 durch einen hier nicht gezeigten Keder verbunden, wie er in strichpunktierten Linien in Fig. 11 an dieser Stelle angedeutet ist.

Wie aus den Fig. 3 bis 5 weiterhin hervorgeht, ist die untere Schicht 6 nicht durchweg von gleichbleibender Dicke ausgeführt, sondern entsprechend dem Stabilitäts- bzw. Polsterungsbedürfnis auch in Teilbereichen dickwandiger ausgebildet. Durch entsprechende Ausbildung der Fertigungsform lassen sich derartige unterschiedliche Schichtdicken ohne weiteres erzielen. Weiterhin ist aus den Fig. ersichtlich, daß sich zwischen der oberen Schicht 5 und der unteren Schicht 6 der Innenschale 2 zum Teil erhebliche Hohlräume befinden. Diese können als Kanäle für die Unterbringung von Kabeln, aber auch als Luftkanäle verwendet werden. Die Außenränder der nach unten umbiegbaren Bereiche der Innenschale 2 d.h. der unteren Schicht 6 bei der in Rede stehenden Ausführungsform sind entsprechend ihrer am Karosserierahmen 4 vorgesehenen Befestigung paßgerecht geschnitten bzw. vorgeformt. Die bereits erwähnten Schichtverdickungen der unteren Schicht 6 bilden, wie aus den Fig. 4 und 5 besonders deutlich hervorgeht, stoßabsorbierende Sicherheitselemente 23, die in diesen Bereichen ein direktes Auftreffen von Körperteilen der Fahrzeuginsassen auf den Karosserierahmen 4 verhindern bzw. die Folgen eines Auftreffens mildern.

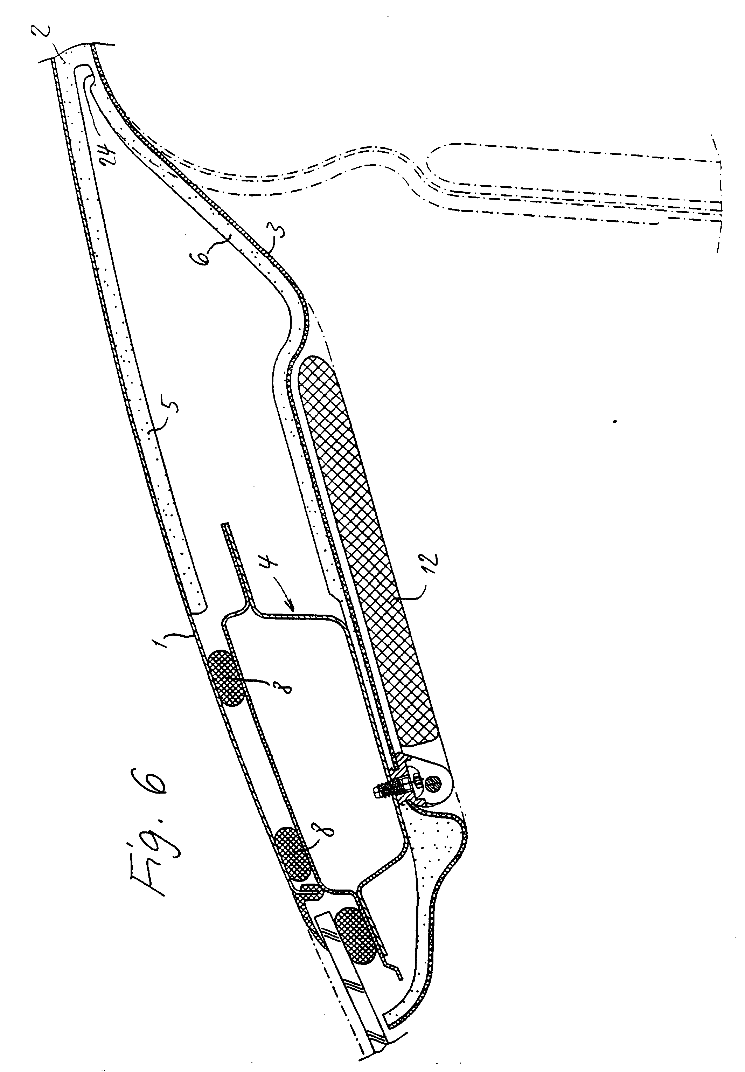

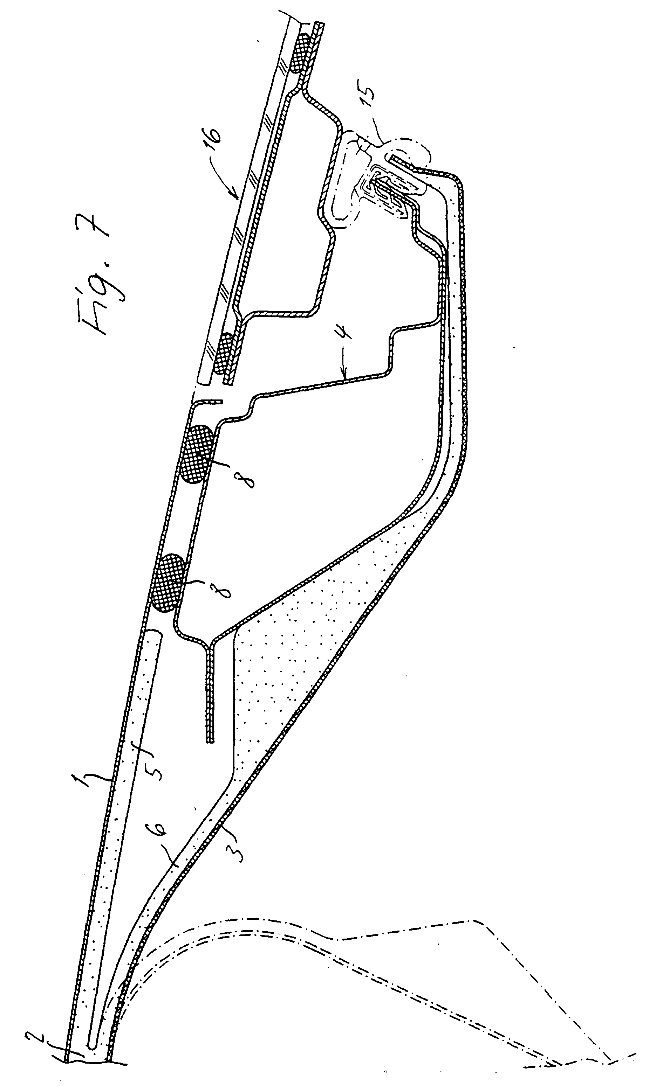

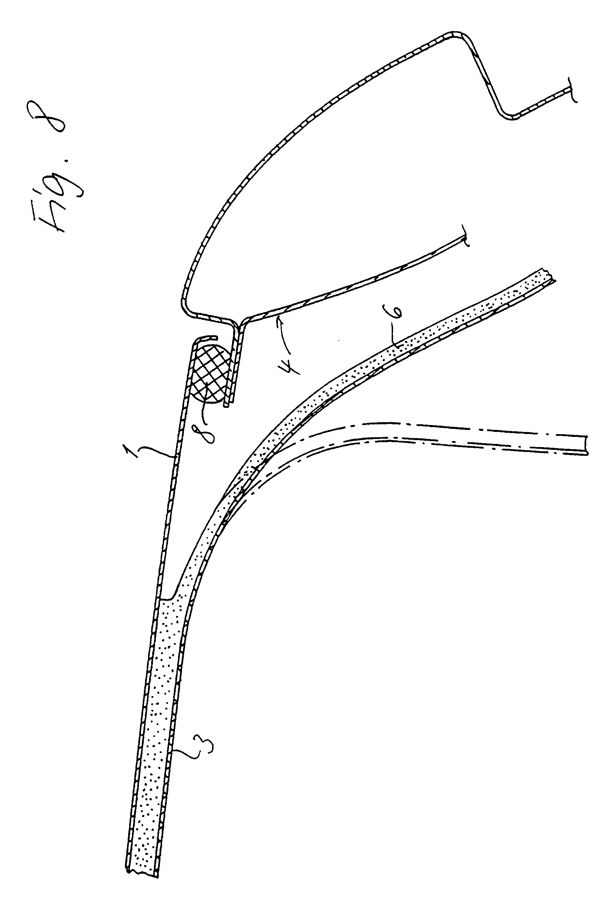

Zur näheren Erläuterung der zweiten Ausführungsform wird nunmehr auf die Fig. 6 bis 8 Bezug genommen, wobei aber lediglich die zur ersten Ausführungsform gemäß der Fig. 3 bis 5 bestehenden Unterschiede hingewiesen werden soll. Während bei der ersten Ausführungsform die Innenfläche der Dachhaut 1 vollständig ausgeschäumt ist, befindet sich bei der zweiten Ausführungsform im Bereich der zur Auflage auf den Karosserierahmen 4 bestimmten Außenränder der starren Dachhaut 1 keine Ausschäumung. Die obere Schicht 5 endet vorn und hinten (Fig. 6 und 7) mit Abstand vor den Außenrändern des Fahrzeugdachs, kann in diesem Bereich aber auch völlig fehlen, so daß aus der Innenschale 2 lediglich eine dünnere untenliegende Schicht 6 weitergeführt ist, wie das aus Fig. 8 hervorgeht. Jedenfalls ist die unterhalb der Dachhaut 1 befindliche Innenschale im Bereich der Auflage auf den Karosserierahmen 4 nicht mit der Dachhaut 1 verbunden. Die über die Außenränder des Fahrzeugdachs überstehende Innenschale ist wiederum für den Durchtritt durch die von dem Karosserierahmen 4 begrenzte Karosserieöffnung nach unten ohne bleibende Deformation umbiegbar und dient der bereits beschriebenen Verkleidung des Karosserierahmens 4. Während im ersten Ausführungsbeispiel gemäß der Fig. 3 bis 5 eine feste Dachhaut 1 nicht unbedingt erforderlich ist, wenn die Innenschale 2 genügend Formstabilität aufweist, ist bei dem Ausführungsbeispiel nach den Fig. 6 bis 8 eine starre tragende Dachhaut 1 zwingend erforderlich. Die Verbindung der Dachhaut 1 und damit des gesamten Fahrzeugdachs mit dem Karosserierahmen 4 übernimmt auch hier in Raupen aufgetragener Klebstoff 8. Bei dieser zweiten Ausführungsform ist in Fig. 6 an der Teilungsstelle von oberer Schicht 5 und unterer Schicht 6 angedeutet, daß an den Umbiegungs- oder Knickstellen auf der der Himmelfläche abgelegenen Seite kerbenähnliche Vertiefungen 24 vorgesehen sein können, welche das vorübergehende Abbiegen der unteren Schicht 6 wesentlich erleichtern. Entsprechende Vertiefungen können auch bei den anderen Ausführungsformen vorgesehen sein.

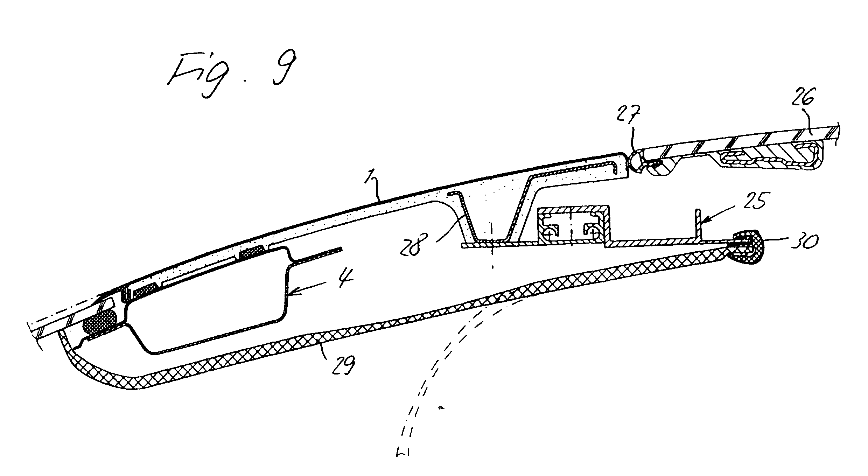

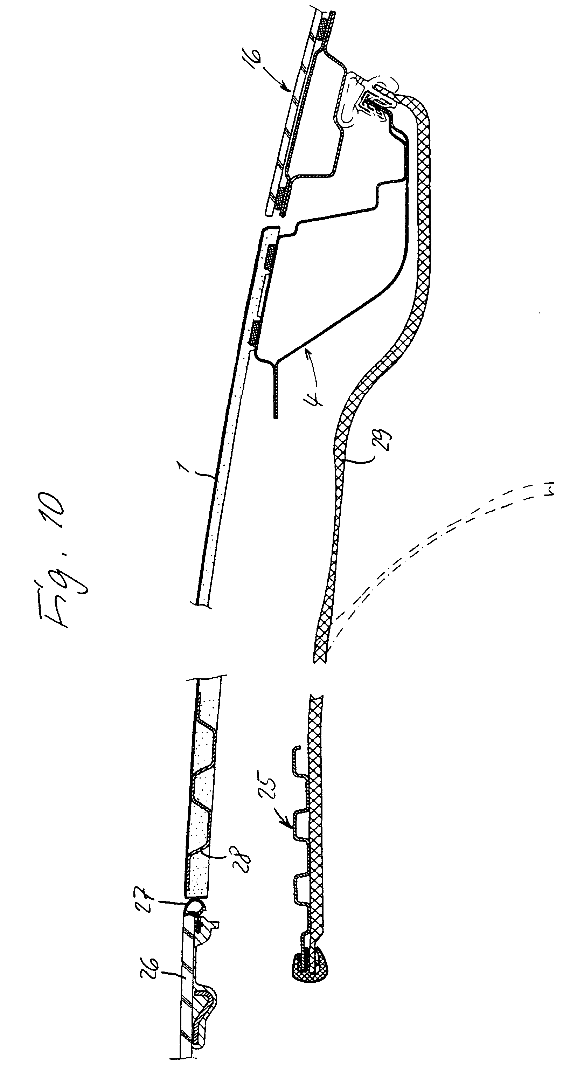

Die dritte Ausführungsform wird nunmehr anhand der Fig. 9 bis 12 näher beschrieben. Die Besonderheit dieser Ausführungsform besteht darin, daß sich in dem Fahrzeugdach eine vormontierte Schiebedacheinheit befindet. Von dieser sind in den genannten Fig. im wesentlichen der Schiebedachrahmen 25, der beispielsweise als Glasdeckel ausgebildete Schiebedeckel 26, das Randspaltabdichtungsprofil 27 und ein die in der festen Dachhaut 1 angebrachte Dachöffnung umgebender Verstärkungsrahmen 28 dargestellt. Im gezeichneten Beispiel ist die feste Dachhaut 1 ausgeschäumt und auf die schon beschriebene Weise mit ihren Randbereichen auf den Karosserierahmen 4 aufgelegt und damit fest verbunden. Bei dieser dritten Ausführungsform ist der als Innenschale 29 vorgeformte Dachhimmel mit Abstand zu der starren Dachhaut 1 an dem unterhalb der Dachhaut 1 befestigten Schiebedachrahmen 25 angebracht. Die wiederum über die Außenränder des Fahrzeugdachs überstehende Innenschale 29 ist für den Durchtritt durch die von dem Karosserierahmen 4 begrenzte Karosserieöffnung nach unten ohne bleibende Deformation umbiegbar und zur Verkleidung des Karosserierahmens 4 und des Schiebedachrahmens 25 ausgebildet. Während die Anbringung und Befestigung der Innenschale 29 an dem Karosserierahmen 4 auf die schon beschriebene Weise erfolgt, übernimmt die Befestigung der Innenschale 29 an dem Schiebedachrahmen 25 ein Aufsteckkeder 30, der sowohl auf einen Flansch des Schiebedachrahmens 25 als auch auf den öffnungsrand der Innenschale 29 aufgesteckt ist, wie das aus den Fig. 9, 10 und 12 hervorgeht. In diesen Fig. ist auch die nach unten umgebogene Montagelage der Innenschale 29 in strichpunktierten Linien dargestellt. Während in den Fig. 9, 10 und 12 durch Weglassen des Bezugsmaterials 3 angedeutet ist, daß die Innenschale 29 an ihrer dem Fahrzeuginnenraum zugekehrten Fläche auch ohne Bezugsmaterial ausgeführt sein kann, veranschaulicht die zu dieser dritten Ausführungsform gehörende Fig. 11 aber, daß auch hier Bezugsmaterial 3 vorhanden sein kann.

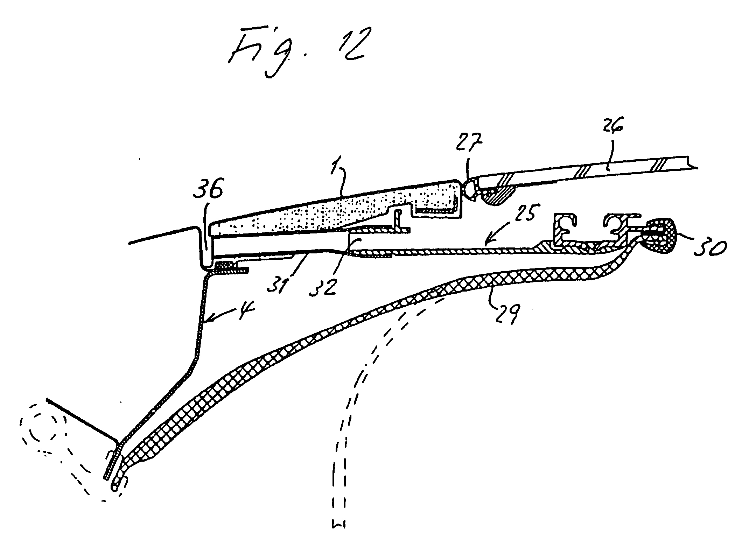

Aus Fig. 12 geht hervor, auf welche Weise über den Randspalt zwischen der festen Dachhaut 1 und dem Schiebedeckel 26 eintretendes und von dem Schiebedachrahmen 25 aufgefangenes Wasser nach außen abgeleitet werden kann. Zu diesem Zweck ist in der an der Unterseite der festen Dachhaut 1 angebrachten Schaumschicht ein Schlauch- oder Rohrstück 31 eingebettet, das einerseits auf eine Abflußtülle 32 des Schiebedachrahmens 25 dicht aufgesteckt ist und andererseits mit einer Öffnung an der Außenkante des Fahrzeugdachs endet. Hier mündet das Schlauch- oder Rohrstück 31 in eine Wasserablauffuge 36, die zwischen dem Außenrand der Dachhaut und der ihm zugekehrten Fläche des Karosserierahmens 4 gebildet ist.

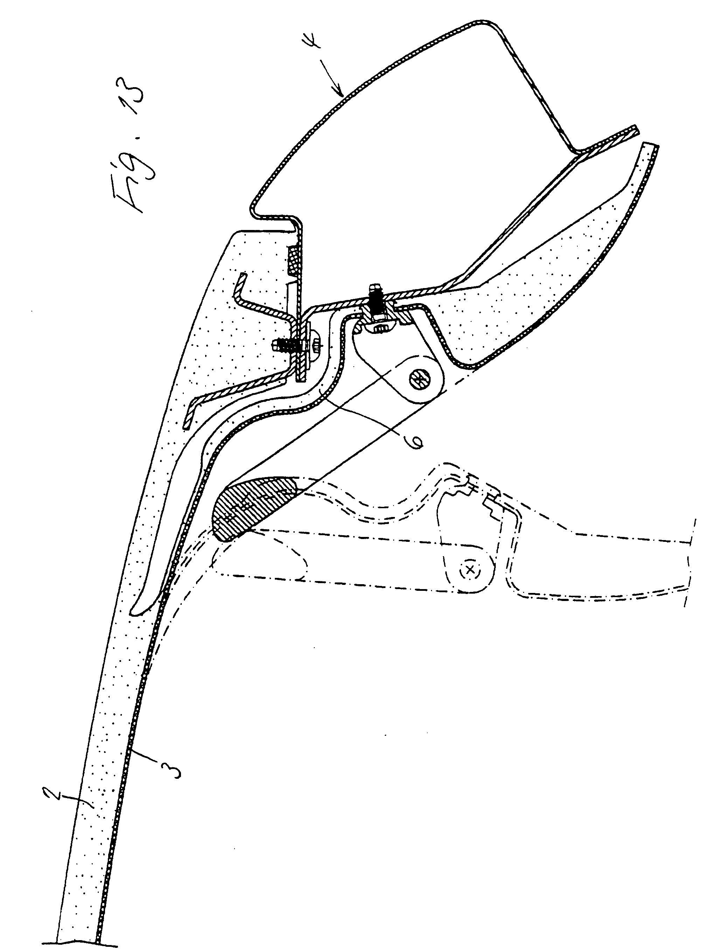

Die vierte Ausführungsform, die in Fig. 13 dargestellt ist, entspricht im wesentlichen der schon unter Bezugnahme auf die Fig. 3 bis 5 ausführlich beschriebenen ersten Ausführungsform. Im Unterschied dazu besitzt die vierte Ausführungsform keine feste Dachhaut. Hier besteht das Fahrzeugdach im wesentlichen aus einem harten schalenförmig geformten Schaumkunststoff mit glatter lackierbarer Außenfläche. Selbstverständlich können in den Schaumkunststoff noch zusätzliche in Querrichtung aber auch in Längsrichtung geführte Verstärkungen eingebettet sein. Die Innenschale 2 ist zugleich Außenschale.

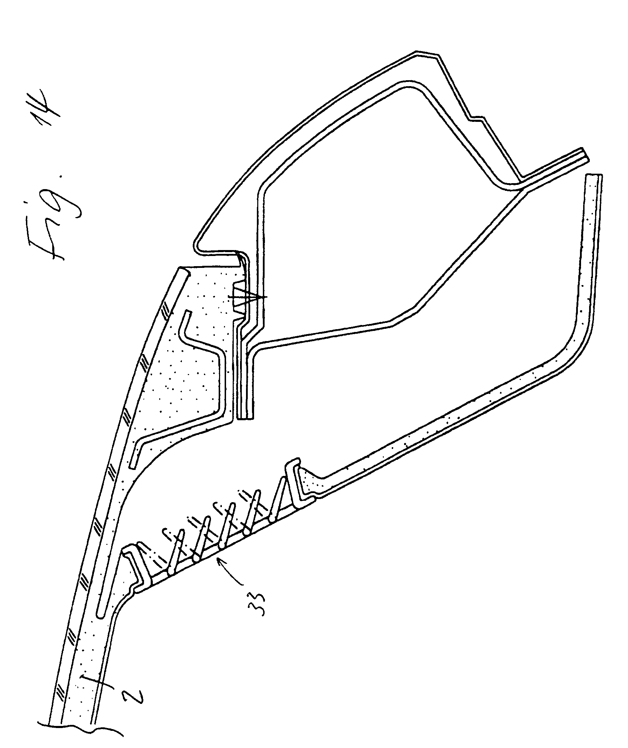

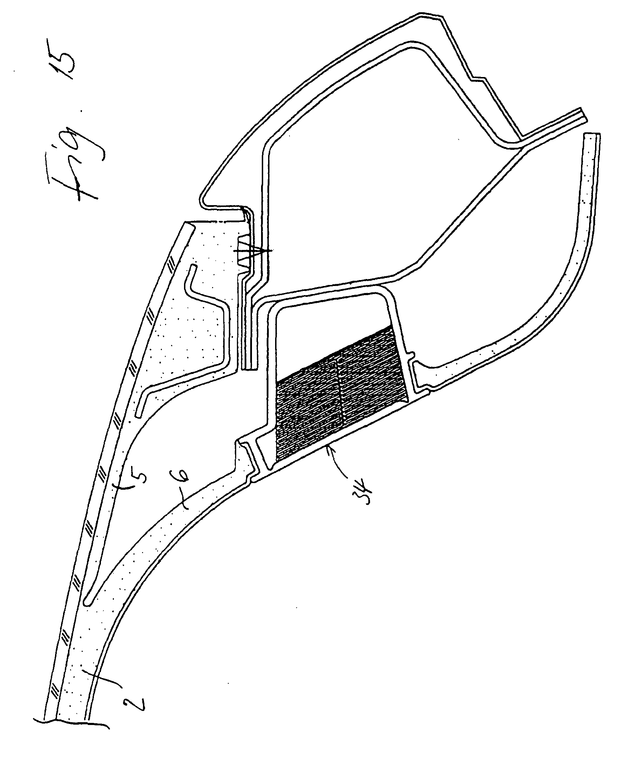

Die fünfte Ausführungsform schließlich ist den Fig. 14 und 15 zu entnehmen. Die fünfte Ausführungsform unterscheidet sich nicht grundsätzlich von der mit Bezug auf die Fig. 3 bis 5 beschriebenen ersten Ausführungsform, mit der Ausnahme, daß hier die dünne Dachhaut 1 ersetzt ist durch eine dickere aus einem transparenten Kunststoff oder Glas gebildete Dachhaut. In diesen Fig. ist aber auch dargestellt, daß an der unteren Schicht 6 nicht nur Sonnenblenden oder Haltegriffe vormontiert werden können, sondern auch Lüftungsgitter 33 (Fig. 14) und sogar Airbags 34 (Fig. 15). Entsprechendes gilt auch für die mit Bezug auf die Fig. 9 bis 12 beschriebene dritte Ausführungsform. Hierbei sind dann die vormontierten Elemente wie Sonnenblenden, Haltegriffe, Lüftungsgitter, stoßabsorbierende Sicherheitselemente, Airbags und dgl. an der Innenschale 29 vormontiert.

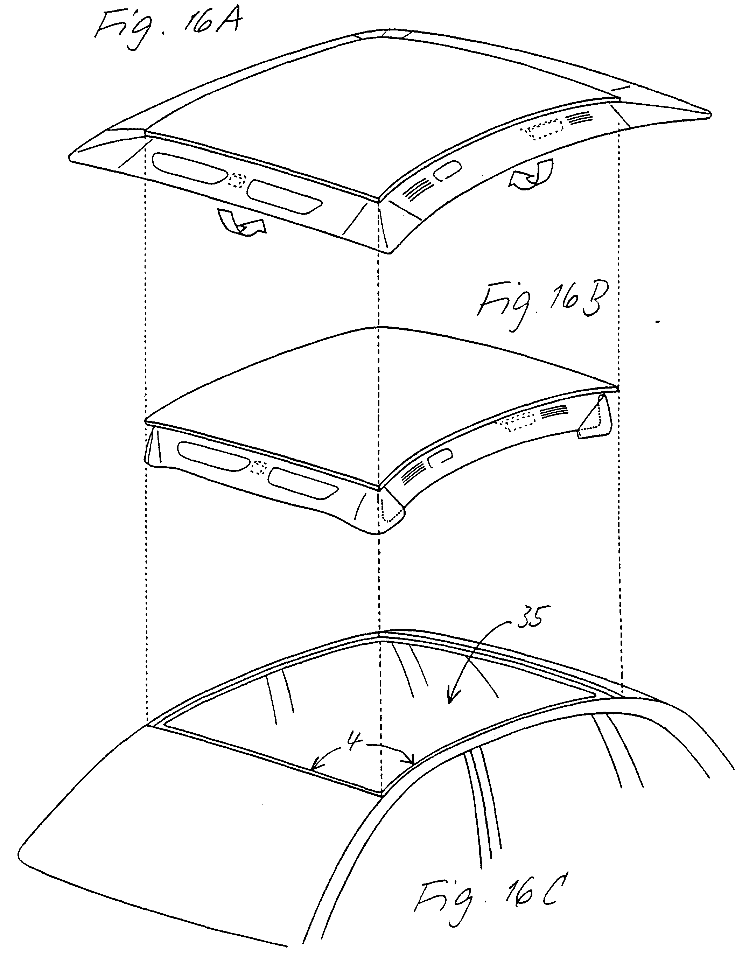

Das Montageverfahren für das beschriebene Fahrzeugdach, das für alle Ausführungsformen des Fahrzeugdachs gleich ist, wird nachfolgend anhand der Fig. 16A bis 16C beschrieben. Das getrennt von der übrigen Fahrzeugkarosserie hergestellte Fahrzeugdach mit allen seinen an der Innenschale vormontierten Elementen hat zunächst etwa das in Fig. 16A dargestellte Aussehen. Deutlich sind die über den Außenrand des Fahrzeugdachs vorstehenden Bereiche der Innenschale zu erkennen. Nunmehr wird die über die Außenränder des Fahrzeugdachs überstehende Innenschale bzw. die untere Schicht der Innenschale unter partieller Faltung in den Eckbereichen nach unten umgebogen, wie das Pfeile in Fig. 16A verdeutlichen. Hierbei erfolgt eine nichtbleibende Deformation und in den Eckbereichen auch eine partielle Faltung der überstehenden Innenschale bzw. der unteren Schicht der Innenschale. Danach hat das Fahrzeugdach etwa die in Fig. 16B dargestellte Form eingenommen. Zur Erleichterung des Einführens der nun gewissermaßen schürzenähnlich herabhängenden Bereiche der Innenschale bzw. der unteren Schicht der Innenschale in die von dem Karosserierahmen 4 gebildete Karosserieöffnung 35 können die herabhängenden Bereiche und damit die umgebogene Lage dieser Bereiche vorübergehend durch ein umfänglich herumgelegtes Band, eine Schnur od. dgl. fixiert werden. Nach dem Aufsetzen des Fahrzeugdachs auf den Karosserierahmen 4 erfolgt zunächst die Befestigung des Fahrzeugdachs am Karosserierahmen, wobei die vorübergehende Fixierung noch beibehalten werden kann. Danach wird die Fixierung ggf. aufgehoben, die Innenschale bzw. die untere Schicht der Innenschale mit ihren zur Verkleidung des Karosserierahmens 4 ausgebildeten Bereichen zurückgebogen, an die nach unten bzw. innen weisenden Flächen des Karosserierahmens angelegt und schließlich ebenfalls am Karosserierahmen befestigt, wie das im einzelnen anhand der Schnittdarstellungen erläutert worden ist.

Es wird ein getrennt von der Fahrzeugkarosserie hergestelltes Fahrzeugdachmodul und ein Montageverfahren vorgeschlagen, um die Montagezeit am Montageband der Automobilfabrik zu verkürzen. Die Besonderheiten des in verschiedenen Ausführungsformen bereitgestellten Dachmoduls bestehen im wesentlichen darin, daß der als Innenschale ausgebildete Dachhimmel allseits über die Außenkanten der Dachfläche übersteht, daß die überstehenden Bereiche die Verkleidungen für den Karosserierahmen 4 bilden, daß in den überstehenden Bereichen bereits alle sonst nachträglich zu montierenden Elemente, wie Sonnenblenden, Haltegriffe, Lüftungsgitter, Innenleuchten, Sicherheitselemente, Airbags u. dgl. schon vormontiert angebracht sein können, und daß die überstehenden Bereiche zum Aufsetzen des Moduldachs auf den Karosserierahmen und den Durchtritt durch die vom Karosserierahmen umgrenzte Karosserieöffnung zeitweilig nach unten ohne bleibende Verformungen umgebogen werden können, bis ein Zurückbiegen möglich ist und die Verkleidung des Karosserierahmens vorgenommen wird.

## Patentansprüche

1. Fahrzeugdach, insbesondere Kraftfahrzeugdach, das sandwichartig und an seiner Innenschale (2) als Dachhimmel ausgebildet, getrennt von der Fahrzeugkarosserie hergestellt, mit seinen Außenrändern auf einen Karosserierahmen (4) auflegbar und mit diesem fest verbindbar ist, **dadurch gekennzeichnet,** daß die Innenschale (2) im Bereich der zur Auflage auf den Karosserierahmen (4) vorgesehenen Außenränder in zwei Schichten (5, 6) aufgeteilt ist, von denen die obere Schicht (5) auf den Karosserierahmen (4) auflegbar ist, während die untere Schicht (6) über die Außenränder des Fahrzeugdachs übersteht, für den Durchtritt durch die von dem Karosserierahmen (4) begrenzte Karosserieöffnung (35) unter partieller Faltung in den Eckbereichen nach unten ohne bleibende Deformationen umbiegbar und zur Verkleidung des Karosserierahmens (4) ausgebildet ist.

2. Fahrzeugdach, insbesondere Kraftfahrzeugdach, das sandwichartig und an seiner Innenschale (2) als Dachhimmel ausgebildet, getrennt von der Fahrzeugkarosserie hergestellt, mit seinen Außenrändern auf einen Karosserierahmen (4) auflegbar und mit diesem fest verbindbar ist, **dadurch gekennzeichnet,** daß die Innenschale (2) außen mit einer starren Dachhaut (1) versehen ist, deren Außenränder zur Auflage auf den Karosserierahmen (4) vorgesehen sind, während die unterhalb der Dachhaut (1) befindliche Innenschale (2) im Bereich der Auflage auf den Karosserierahmen (4) nicht mit der Dachhaut (1) verbunden ist, über die Außenränder des Fahrzeugdachs übersteht, für den Durchtritt durch die von dem Karosserierahmen (4) begrenzte Karosserieöffnung (35) unter partieller Faltung in den Eckbereichen nach unten ohne bleibende Deformationen umbiegbar und zur Verkleidung des Karosserierahmens (4) ausgebildet ist.

3. Fahrzeugdach, insbesondere Kraftfahrzeugdach, das sandwichartig an seiner Innenschale (29) als Dachhimmel ausgebildet, getrennt von der Fahrzeugkarosserie hergestellt, mit seinen Außenrändern auf einen Karosserierahmen (4) auflegbar und mit diesem fest verbindbar ist, **dadurch gekennzeichnet,** daß der als Innenschale (29) vorgeformte Dachhimmel mit Abstand zu einer starren Dachhaut (1) an einem unterhalb der Dachhaut befestigten Schiebedachrahmen (25) angebracht ist, über die Außenränder des Fahrzeugdachs übersteht, für den Durchtritt durch die von dem Karosserierahmen (4) begrenzte Karosserieöffnung (35) unter partieller Faltung in den Eckbereichen nach unten ohne bleibende Deformationen umbiegbar und zur Verkleidung des Karosserierahmens (4) und des Schiebedachrahmens (25) ausgebildet ist.

4. Fahrzeugdach nach einem der Ansprüche 1 bis 3, **dadurch gekennzeichnet,** daß die Innenschale (2, 29) aus einem PUR-Schaumstoff geformt und an den Umbiegungs- oder Knickstellen auf der der Himmelfläche abgelegenen Seite mit kerbenähnlichen Vertiefungen (24) versehen ist.

5. Fahrzeugdach nach einem der Ansprüche 1 bis 4, **dadurch gekennzeichnet,** daß die nach unten umbiegbaren Bereiche der Innenschale (2, 29) an den dafür geeigneten Orten mit mindestens einem vormontierten Element aus der aus Sonnenblenden (12), Haltegriffen (21), Lüftungsgittern (33), Innenleuchten, stoßabsorbierenden Sicherheitselementen (23), Airbags (34) und dgl. bestehenden Gruppe versehen bzw. mit vorbereiteten Anbringungsorten für mindestens eines dieser Elemente versehen sind.

6. Fahrzeugdach nach einem der Ansprüche 1 bis 5, **dadurch gekennzeichnet**, daß die Außenränder der nach unten umbiegbaren Bereiche der Innenschale (2, 29) zur Befestigung an Flanschrändern des Karosserierahmens (4) mittels Kunststoffprofilstreifen, Keder od. dgl. (15) entsprechend paßgerecht beschnitten bzw. vorgeformt sind.

7. Fahrzeugdach nach einem der Ansprüche 1 und 3 bis 6, **dadurch gekennzeichnet,** daß die Dachränder in ihren zur Auflage auf den Karosserierahmen (4) vorgesehenen Bereichen mit im Schaumstoff eingeformten Aufnahmenuten (7) für Klebstoff versehen sind.

8. Fahrzeugdach nach einem der Ansprüche 1 und 3 bis 7, **dadurch gekennzeichnet,** daß die Dachränder in ihren zur Auflage auf den Karosserierahmen (4) vorgesehenen Bereichen mit in den Schaumstoff eingebetteten Verstärkungsteilen (17) versehen sind.

9. Fahrzeugdach nach Anspruch 8, **dadurch gekennzeichnet,** daß die Verstärkungsteile (17) dem Karosserierahmen (4) zur Befestigung mit ihrer unteren Fläche unmittelbar flächig anliegen.

10. Fahrzeugdach nach einem der Ansprüche 3 bis 9, **dadurch gekennzeichnet,** daß über den Randspalt zwischen der festen Dachhaut (1) und dem Schiebedeckel (26) eintretendes und von dem Schiebedachrahmen (25) aufgefangenes Wasser nach außen abgeleitet wird, durch ein im Eckbereich des Schiebedachrahmens (25) in die an der Unterseite der festen Dachhaut (1) angebrachten Schaumschicht eingebettetes Schlauch- oder Rohrstück (31), das einerseits auf eine Abflußtülle (32) des Schiebedachrahmens (25) dicht aufgesteckt ist und andererseits mit einer Öffnung an der Außenkante des Fahrzeugdachs endet.

11. Fahrzeugdach nach Anspruch 10, **dadurch gekennzeichnet,** daß das Schlauch- oder Rohrstück (31) an der Außenkante des Fahrzeugdachs in eine Wasserablauffuge (36) mündet, die zwischen dem Außenrand der Dachhaut (1) und der ihm zugekehrten Fläche des Karosserierahmens (4) gebildet ist.

12. Verfahren zur Montage des nach einem der vorangehenden Ansprüche ausgebildeten Fahrzeugdachs an einem Karosserierahmen (4), **dadurch gekennzeichnet,** daß
(a) die über die Außenränder des Fahrzeugdachs überstehende Innenschale (2) bzw. die untere Schicht (6) der Innenschale (2) unter partieller Faltung in den Eckbereichen nach unten umgebogen wird,
(b) das Fahrzeugdach unter Durchtritt der umgebogenen Bereiche der Innenschale durch den Karosserierahmen (4) hindurch mit seinen Außenrändern von oben dem Karosserierahmen (4) aufgelegt und daran befestigt wird, und
(c) die Innenschale (2) mit ihren zur verkleidung des Karosserierahmens (4) ausgebildeten Bereichen zurückgebogen, an die nach unten bzw. innen weisenden Flächen des Karosserierahmens (4) angelegt und dann am Karosserierahmen (4) befestigt werden.

13. Verfahren nach Anspruch 12, **dadurch gekennzeichnet,** daß die umgebogene Lage der davon betroffenen Bereiche der Innenschale (2) vorübergehend fixiert wird und die Fixierung nach Durchtritt der umgebogenen Bereiche durch den Karosserierahmen (4) und Befestigung des Fahrzeugdachs an dem Karosserierahmen (4) aufgehoben wird.

## Claims

1. Vehicle roof, particularly motor vehicle roof, constructed in sandwich-like manner with the roof lining constructed as an inner shell, is manufactured separately from the vehicle body, is placed by means of its outer edges on a body framework (4) and is firmly connected thereto, characterized in that the inner shell (2) in the vicinity of the outer edges provided for resting on the body framework (4) is subdivided into two layers (5, 6), whereof the upper layer (5) can be placed on the body framework (4), whilst the lower layer (6) projects over the outer edges of the vehicle roof, for the passage through the body opening (35) bounded by the body framework (4) and accompanied by partial folding in the corner areas can be bent downwards without permanent deformation and is constructed for covering the body framework (4).

2. Vehicle roof, particularly motor vehicle roof, constructed in sandwich-like manner with the roof lining constructed as an inner shell, is manufactured separately from the vehicle body, is placed by means of its outer edges on a body framework (4) and is firmly connected thereto, characterized in that the inner shell (2) is provided on the outside with a rigid roof membrane (1), whose outer edges are intended to rest on the body framework (4), whilst the inner shell (2) located below the roof membrane (1) is not connected to the latter (1) in the area of resting on the body framework (4), projects over the outer edges of the vehicle roof, for the passage through the body opening (35) bounded by the body framework (4), accompanied by partial folding in the corner areas, can be bent downwards without permanent deformation and is constructed for covering the body framework (4).

3. Vehicle roof, particularly motor vehicle roof, constructed in sandwich-like manner with the roof lining designed as an inner shell (29), is manufactured separately from the vehicle body, can be placed by means of its outer edges on a body framework (4) and is firmly connectable thereto, characterized in that the roof lining preshaped as an inner shell and spaced from a rigid roof membrane (1) is fitted to a sliding roof framework (25) fixed below the roof membrane, projects over the outer edges of the vehicle roof, for passage through the body opening (35) bounded by the body framework. (4), accompanied by partial folding in the corner areas, can be bent downwards without permanent deformation and is constructed for covering the body framework (4) and sliding roof framework (25).

4. Vehicle roof according to one of the claims 1 to 3, characterized in that the inner shell (2, 29) is shaped from a PUR foam and at the bending or fold points is provided on the side remote from the lining surface with notch-like depressions (24).

5. Vehicle roof according to one of the claims 1 to 4, characterized in that the downwardly bendable areas of the inner shell (2, 29) are provided at the intended points with at least one preassembled element from the group comprising sun visors (12), handles (21), ventilation grills (33), interior lights, shock-absorbing safety elements (23), airbags (34), etc. or are provided with prepared fitting locations for at least one of these elements.

6. Vehicle roof according to one of the claims 1 to 5, characterized in that the outer edges of the downwardly bendable areas of the inner shell (2, 29) for fixing to flange edges of the body framework (4) by means of plastic profile strips, beadings, etc. (15) are preshaped or trimmed in appropriate precise fitting manner.

7. Vehicle roof according to one of the claims 1 and 3 to 6, characterized in that in the areas of the roof edges for resting on the body framework (4) are provided with adhesive reception grooves (7) shaped into the foam.

8. Vehicle roof according to one of the claims 1 and 3 to 7, characterized in that in the areas of the roof edges intended to rest on the body framework (4) are provided with reinforcing parts (17) embedded in the foam.

9. Vehicle roof according to claim 8, characterized in that the reinforcing parts (7) engage in direct laminar manner with their lower face on the body framework (4) for fixing purposes.

10. Vehicle roof according to one of the claims 3 to 9, characterized in that water entering by means of the marginal gap between the fixed roof membrane (1) and the sliding cover (26) and collected by the sliding roof framework (25) is drained off outwards by a hose or pipe section (31) embedded in the foam layer fitted to the underside of the fixed roof membrane (1) in the corner area of the sliding roof framework (25), said section being on the one hand tightly engaged on a drain spout (32) of the sliding roof framework (25) and on the other terminating with an opening at the outer edge of the vehicle roof.

11. Vehicle roof according to claim 10, characterized in that the hose or pipe section (31) issues at the outer edge of the vehicle roof into a water outlet gap (36) formed between the outer edge of the roof membrane (1) and the facing surface of the body framework (4).

12. Method for assembling the vehicle roof constructed according to one of the preceding claims on a body framework (4), characterized in that
(a) the lower layer (6) of the inner shell (2) or the inner shell (2) projecting over the outer edges of the vehicle roof is bent downwards accompanied by partial folding in the corner areas,
(b) accompanied by the passage of the bent over areas of the inner shell through the body framework (4), the outer edges of the vehicle roof are placed from above on the body framework (4) and fixed thereto and
(c) the areas of the inner shell (2) constructed for covering the body framework (4) are bent back, placed on the downwardly or inwardly directed faces of the body framework (4) and are then fixed to the body framework (4).

13. Method according to claim 12, characterized in that the bent over position of the affected areas of the inner shell (2) is temporarily fixed and the fixing is eliminated following the passage of the bent over areas through the body framework (4) and the fixing of the vehicle roof to the body framework (4).

## Revendications

1. Toit de véhicule, en particulier toit de véhicule automobile qui, doté d'une construction sandwich et conçu au niveau de son revêtement intérieur (2) comme un garnissage de toit, est fabriqué séparément par rapport à la carrosserie du véhicule, est apte à être posé avec ses bords extérieurs sur un cadre de carrosserie (4) et est apte à être relié solidement à celui-ci, **caractérisé** en ce que le revêtement intérieur (2) est divisé, dans la zone des bords extérieurs destinés à être posés sur le cadre de carrosserie (4), en deux couches (5, 6), la couche supérieure (5) étant apte à être posée sur le cadre de carrosserie (4) tandis que la couche inférieure (6) dépasse des bords extérieurs du toit de véhicule, est apte à être recourbée vers le bas, sans déformations durables, en vue de passer à travers l'ouverture de carrosserie (35) délimitée par le cadre de carrosserie (4), avec un pliage partiel dans les zones d'angle, et est conçue pour recouvrir le cadre de carrosserie (4).

2. Toit de véhicule, en particulier toit de véhicule automobile qui, doté d'une construction sandwich et conçu au niveau de son revêtement intérieur (2) comme un garnissage de toit, est fabriqué séparément par rapport à la carrosserie du véhicule, est apte à être posé avec ses bords extérieurs sur un cadre de carrosserie (4) et est apte à être relié solidement à celui-ci, **caractérisé** en ce que le revêtement intérieur (2) est pourvu, à l'extérieur, d'une couverture rigide (1) dont les bords extérieurs sont destinés à être posés sur le cadre de carrosserie (4), tandis que le revêtement intérieur (2) qui se trouve au-dessous de la couverture (1) n'est pas relié à celle-ci dans la zone d'appui sur le cadre de carrosserie (4), dépasse des bords extérieurs du toit de véhicule, est apte à être recourbé vers le bas, sans déformations durables, en vue de passer à travers l'ouverture de carrosserie (35) délimitée par le cadre de carrosserie (4), avec un pliage partiel dans les zones d'angle, et est conçu pour recouvrir le cadre de carrosserie (4).

3. Toit de véhicule, en particulier toit de véhicule automobile qui, doté d'une construction sandwich et conçu au niveau de son revêtement intérieur (29) comme un garnissage de toit, est fabriqué séparément par rapport à la carrosserie du véhicule, est apte à être posé avec ses bords extérieurs sur un cadre de carrosserie (4) et est apte à être relié solidement à celui-ci, **caractérisé** en ce que le garnissage de toit préformé sous la forme d'un revêtement intérieur (29) est monté, à une certaine distance d'une couverture rigide (1), sur un cadre de toit coulissant (25) fixé au-dessous de celle-ci, dépasse des bords extérieurs du toit de véhicule, est apte à être recourbé vers le bas, sans déformations durables, en vue de passer à travers l'ouverture de carrosserie (35) délimitée par le cadre de carrosserie (4), avec un pliage partiel dans les zones d'angle, et est conçu pour recouvrir le cadre de carrosserie (4) et le châssis de toit coulissant (25).

4. Toit de véhicule selon l'une des revendications 1 à 3, **caractérisé** en ce que le revêtement intérieur (2, 29) est moulé à partir d'une mousse de polyuréthanne et est pourvu au niveau des points de pliage ou de coude, sur le côté opposé à la surface du toit, de creux en forme d'encoches (24).

5. Toit de véhicule selon l'une des revendications 1 à 4, **caractérisé** en ce que les zones du revêtement intérieur (2, 29) qui sont aptes à être recourbées vers le bas sont pourvues, aux endroits adéquats, d'au moins un élément prémonté du groupe comprenant les pare-soleil (12), les poignées (21), les grilles d'aération (33), les lampes intérieures, les éléments de sécurité absorbant les choc (23), les airbags (34), etc., ou sont pourvues d'endroits de montage préparés pour l'un au moins de ces éléments.

6. Toit de véhicule selon l'une des revendications 1 à 5, **caractérisé** en ce que les bords extérieurs des zones du revêtement intérieur (2, 29) qui sont aptes à être recourbées vers le bas sont coupés ou préformés de manière adaptée, en vue d'être fixés à des bords en forme d'ailes du cadre de carrosserie (4) à l'aide de bandes profilées en matière plastique, de bourrelets, etc. (15).

7. Toit de véhicule selon l'une des revendications 1 et 3 à 6, **caractérisé** en ce que les bords du toit sont pourvus, dans leurs zones destinées à être posées sur le cadre de carrosserie (4), de rainures de réception (7) pour de la colle qui sont formées dans la mousse.

8. Toit de véhicule selon l'une des revendications 1 et 3 à 7, **caractérisé** en ce que les bords du toit sont pourvus, dans leurs zones destinées à être posées sur le cadre de carrosserie (4), d'éléments de renforcement (17) encastrés dans la mousse.

9. Toit de véhicule selon la revendication 8, **caractérisé** en ce que les éléments de renforcement (17) sont appliqués directement à plat, avec leur surface inférieure, sur le cadre de carrosserie (4) en vue de leur fixation.

10. Toit de véhicule selon l'une des revendications 3 à 9, **caractérisé** en ce que l'eau qui entre par l'interstice du bord, entre la couverture solide (1) et le couvercle coulissant (26), et qui est reçue par le châssis de toit coulissant (25) est évacuée vers l'extérieur grâce à un élément en forme de tuyau ou de tube (31) qui est encastré, dans la zone d'angle du châssis de toit coulissant (25), dans la couche de mousse prévue sur le côté inférieur de la couverture solide (1), qui est enfilé de manière étanche sur un bec d'écoulement (32) du châssis de toit coulissant (25), d'un côté, et qui se termine par une ouverture sur le bord extérieur du toit de véhicule, de l'autre côté.

11. Toit de véhicule selon la revendication 10, **caractérisé** en ce que l'élément en forme de tuyau ou de tube (31) débouche, sur le bord extérieur du toit de véhicule, dans une rainure d'écoulement d'eau (36) qui est formée entre le bord extérieur de la couverture (1) et la surface du cadre de carrosserie (4) tournée vers ce bord extérieur.

12. Procédé pour le montage du toit de véhicule conçu selon l'une des revendications précédentes sur un cadre de carrosserie (4), **caractérisé** en ce que
(a) le revêtement intérieur (2) qui dépasse des bords extérieurs du toit de véhicule ou la couche inférieure (6) dudit revêtement intérieur (2) est recourbé vers le bas avec un pliage partiel dans les zone d'angle,
(b) le toit de véhicule, lorsque les zones recourbées du revêtement intérieur passent à travers le cadre de carrosserie (4), est posé par le haut, avec ses'bords extérieurs, sur ledit cadre (4) et est fixé à celui-ci, et
(c) le revêtement intérieur (2) est déplié, avec ses zones conçues pour recouvrir le cadre de carrosserie (4), est appliqué contre les surfaces de celui-ci qui sont dirigées vers le bas et vers l'intérieur, et est ensuite fixé audit cadre de carrosserie (4).

13. Procédé selon la revendication 12, **caractérisé** en ce que les zones concernées du revêtement intérieur (2) sont bloquées provisoirement en position recourbée, et ce blocage est supprimé après que les zones recourbées sont passées à travers le cadre de carrosserie (4) et que le toit de véhicule a été fixé à celui-ci.
